# FASCICULE DE BREVET EUROPEEN

(11) **EP 2 595 279 B1**
(45) Date de publication et mention de la délivrance du brevet: **03.02.2016**
(21) Numéro de dépôt: 12192471.6
(22) Date de dépôt: 13.11.2012
(51) Int. Cl.: H02J 9/06, H02M 3/158, B64D 41/00

(54) **Dispositif d'alimentation à découpage et aéronef comprenant au moins un tel dispositif**
Schaltnetzteilvorrichtung und Luftfahrzeug, das mit mindestens einer solchen Vorrichtung ausgestattet ist
Switching mode power supply device and aircraft including at least one such device

(30) Priorité: 18.11.2011 FR 1160537
(43) Date de publication de la demande: 22.05.2013
(73) Titulaire: Airbus Operations (Société par actions simplifiée), 31060 Toulouse (FR)
(72) Inventeur: Rieux-Lopez, Olivier, 81310 Lisle sur Tarn (FR); Davy, Arnaud, 31140 Pechbonnieu (FR); Pinchon, Thibault, 31500 Toulouse (FR)
(74) Mandataire: Ilgart, Jean-Christophe

(56) Documents cités:
- EP-A2- 1 355 403
- WO-A1-2011/003975
- FR-A1- 2 895 167
- PACHECO V M ET AL: "An on line no-break with power factor correction and output voltage stabilization", INTELEC 2002. 24TH. INTERNATIONAL TELECOMMUNICATIONS ENERGY CONFERENCE. MONTREAL, QUEBEC, CANADA, SEPT. 29 - OCT. 3, 2002; [INTELEC. INTERNATIONAL TELECOMMUNICATIONS ENERGY CONFERENCE], NEW YORK, NY : IEEE, US, vol. CONF. 24, 29 septembre 2002 (2002-09-29), pages 438-443, XP010614659, DOI: 10.1109/INTLEC.2002.1048693 ISBN: 978-0-7803-7512-3

## Description

### DOMAINE TECHNIQUE

L'invention concerne un dispositif d'alimentation à découpage utilisable notamment dans un aéronef, par exemple un avion, et un aéronef comprenant au moins un tel dispositif.

### ÉTAT DE LA TECHNIQUE ANTÉRIEURE

Le domaine technique de l'invention est celui des alimentations à découpage en électronique de puissance et celui de la protection des appareils électriques qu'elles alimentent contre des microcoupures d'alimentation réseau ou la présence d'une tension d'alimentation inférieure à un seuil. En deçà de ce seuil l'alimentation à découpage ne fonctionne plus de manière satisfaisante. Dans la suite de la description, on emploiera le terme de microcoupure mais cela englobe également une tension d'alimentation réseau inférieure au seuil.

On considère une alimentation à découpage, recevant en entrée une tension continue issue d'un réseau continu, ou par extension résultant du redressement d'une tension alternative issue d'un réseau alternatif, le réseau étant soumis à un risque de microcoupure. L'invention a pour objectif de permettre à cette alimentation de continuer à fonctionner de manière satisfaisante, c'est-à-dire de continuer à fournir ses tensions de sortie, durant une microcoupure du réseau, lorsque qu'elle est privée de source d'énergie pendant un temps court ou lorsqu'elle est alimentée par une tension trop basse. Pour une coupure plus longue, l'alimentation finit par cesser de fonctionner, mais avec un certain délai, ce qui permet à un dispositif alimenté de s'arrêter dans de meilleures conditions.

La plupart des solutions connues consistent à incorporer dans l'alimentation une réserve d'énergie électrique, en général un condensateur. Cette réserve d'énergie est chargée et maintenue chargée lorsque une tension réseau est présente, en fonctionnement normal. Elle est utilisée comme source d'énergie et se décharge pour assurer le fonctionnement de l'alimentation durant une microcoupure, lorsque le réseau ne fournit plus d'énergie, soit parce qu'il ne peut plus fournir de courant, soit parce que sa tension est devenue trop basse pour pouvoir être exploitée par l'alimentation.

L'invention concerne les cas où cette réserve d'énergie est chargée par un convertisseur continu-continu dédié appelé chargeur, permettant d'assurer que la quantité d'énergie stockée ne dépend pas de la valeur de la tension réseau. L'alimentation comprend, en général en plus du chargeur et de la réserve d'énergie, des convertisseurs continu-continu dits de sortie, chargés de délivrer des tensions continues de sortie, ces tensions de sorties étant régulées et prenant des valeurs souhaitées : par exemple : + 5 V ; + 3,3 V ; +/- 15 V, ces valeurs étant courantes en aéronautique.

Selon la façon dont le chargeur et la réserve d'énergie sont raccordés, la structure de la réserve d'énergie peut être « série » ou « parallèle ».

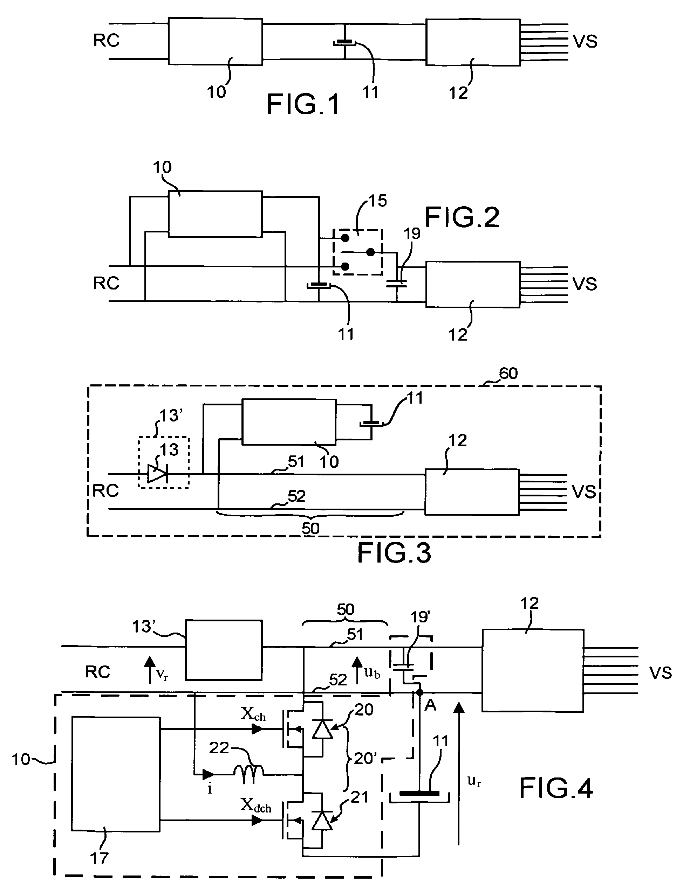

Dans une structure série, illustrée sur la figure 1, le chargeur 10 est branché par une entrée à un réseau continu d'alimentation RC. Il est traversé par la totalité de la puissance d'entrée fournie par le réseau RC. Il est raccordé par une sortie à la réserve d'énergie 11. Plusieurs convertisseurs continu-continu de sortie 12 sont connectés par une entrée aux bornes de la réserve d'énergie 11. Dans la suite de la description, le terme « plusieurs » signifie au moins deux. Les convertisseurs de sortie 12 fournissent en sortie des tensions régulées de sortie VS.

Cette puissance d'entrée, après avoir traversé le chargeur 10, est utilisée, d'une part, pour charger la réserve d'énergie 11 et, d'autre part, par les convertisseurs de sortie 12.

Une telle structure série présente les avantages suivants :
- Les convertisseurs de sortie 12 voient à leur entrée une tension continue régulée pendant le fonctionnement normal, indépendamment des fluctuations du réseau.
- Les convertisseurs de sortie 12 sont connectés en permanence à la réserve d'énergie 11. Ils ne sont donc pas perturbés au début de la microcoupure, lorsqu'ils cessent d'utiliser l'énergie du réseau RC pour commencer à utiliser celle de la réserve d'énergie 11. Il en va de même à la fin de la coupure.

Par contre :
- le chargeur 10 génère des pertes en permanence, y compris en fonctionnement normal.
- Pour exploiter correctement l'énergie stockée dans la réserve d'énergie 11, les convertisseurs de sortie 12 doivent être capables de fonctionner avec une tension à leur entrée beaucoup plus faible que celle présente en fonctionnement normal.

Dans une structure parallèle, illustrée sur la figure 2, le chargeur 10 est branché en dérivation sur le réseau RC. La réserve d'énergie 11 est connectée à une sortie du chargeur 10. Le chargeur 10 ne prend en charge que la puissance nécessaire à la charge de la réserve d'énergie 11. Un commutateur 15 à deux entrées et une sortie est présent. Sa sortie est connectée à une entrée des convertisseurs de sortie 12. L'une de ses entrées est connectée à un noeud commun entre la sortie du chargeur 10 et la réserve d'énergie 11. L'autre de ses entrées est connectée au réseau RC.

Dans une première position, le commutateur 15 relie l'entrée des convertisseurs de sortie 12 à la réserve d'énergie 11, dans une seconde position, il relie l'entrée des convertisseurs de sortie 12 au réseau RC.

Les convertisseurs de sortie 12 sont alimentés, en fonctionnement normal, par le réseau RC, c'est-à-dire en amont du chargeur 10. Le commutateur 15 est dans la seconde position.

En présence d'une microcoupure, les convertisseurs de sortie 12 sont alimentés par la réserve d'énergie 11. Le commutateur 15 est dans la première position.

Il est préférable de prévoir un condensateur de découplage 19 parallèle connecté en entrée des convertisseurs de sortie 12 permet de maintenir une tension suffisante en entrée des convertisseurs de sortie 12 pendant la manoeuvre du commutateur 15.

Une telle structure parallèle présente l'avantage suivant. Le chargeur 10 ne génère des pertes significatives que pendant la durée de charge initiale de la réserve d'énergie 11.

Par contre au début d'une microcoupure, au moment où l'on cesse d'utiliser l'énergie provenant du réseau RC pour commencer à utiliser celle de la réserve d'énergie 11, les convertisseurs de sortie 12 doivent être déconnectés du réseau RC et connectés à la réserve d'énergie 11 à l'aide du commutateur 15. Il en va de même à la fin de la coupure. Cela entraine des difficultés, avec notamment les risques suivants : interruption du fonctionnement des convertisseurs de sortie 12, pics de courant lors de la connexion entre parties de circuits comprenant des condensateurs chargés à des tension différentes, oscillations, décharge de la réserve d'énergie 11 vers le réseau RC, oscillations intempestives d'une logique de décision destinée à commander le commutateur 15.

Pour exploiter correctement l'énergie stockée dans la réserve d'énergie 11, les convertisseurs de sortie 12 doivent être capables de fonctionner avec une plage de tension d'entrée étendue.

Les convertisseurs de sortie 12 voient à leur entrée les variations de la tension réseau RC pendant le fonctionnement normal.

On connaît par ailleurs du document FR 2 8958 167 A1 un dispositif d'alimentation conforme au préambule de la revendication 1.

### EXPOSÉ DE L'INVENTION

La présente invention a pour but de proposer un dispositif d'alimentation à découpage comportant une réserve d'énergie et incorporant plusieurs convertisseurs continu-continu de sortie, ce dispositif d'alimentation ne présentant pas les limitations et difficultés ci-dessus.

Un but de l'invention est en particulier de proposer un tel dispositif d'alimentation à découpage dans lequel les convertisseurs de sortie sont alimentés par le réseau en fonctionnement normal et par de l'énergie stockée dans une réserve d'énergie durant une microcoupure, mais dans lequel les convertisseurs de sortie ne sont pas perturbés lorsque leur alimentation bascule du réseau à la réserve d'énergie et vice versa.

Un autre but de l'invention est de proposer un tel dispositif d'alimentation à découpage dans lequel le chargeur ne génère pas de pertes significatives en permanence.

Encore un autre but de l'invention est de proposer un tel dispositif d'alimentation à découpage dans lequel les convertisseurs de sortie voient à leur entrée une tension continue régulée et adaptée à leur fonctionnement lorsqu'ils sont alimentés par la réserve d'énergie, indépendamment de la tension aux bornes de la réserve d'énergie.

Pour atteindre ces buts l'invention concerne plus précisément un dispositif d'alimentation à découpage tel que defini par la revendication 1.

Le module anti-retour peut comporter une diode, ou au moins un composant commandable tel qu'un transistor, un interrupteur, un relais mécanique, un élément interrupteur unidirectionnel en courant, ou une diode montée en parallèle avec un interrupteur et un module de commande du composant commandable ou de l'interrupteur.

Le module anti-retour peut être commandé par le signal d'autorisation de décharge.

La présente invention concerne également un aéronef dans lequel est implanté au moins un dispositif d'alimentation à découpage ainsi caractérisé.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1 et 2 (déjà décrites) illustrent deux dispositifs d'alimentation à découpage de l'art antérieur ;
la figure 3 illustre schématiquement le dispositif d'alimentation à découpage de l'invention ;
la figure 4 montre un exemple de réalisation du dispositif d'alimentation à découpage de l'invention, le chargeur étant illustré plus en détail ;
la figure 5 montre un exemple de réalisation du dispositif d'alimentation à découpage de l'invention, le chargeur et sa commande étant illustrés plus en détail.

Des parties identiques, similaires ou équivalentes des différentes figures portent les mêmes références numériques de façon à faciliter le passage d'une figure à l'autre.

### EXPOSE DETAILLE DE MODES DE REALISATION PARTICULIERS

Comme illustré sur la figure 3, dans le dispositif d'alimentation à découpage de l'invention, le chargeur 10 est utilisé à la fois lors de la charge et de la décharge de la réserve d'énergie 11.

Dans ce dispositif d'alimentation à découpage, le chargeur 10 est relié, d'un premier côté appelé entrée, au réseau électrique continu, ou alternatif redressé RC au travers d'un module anti-retour 13' schématisé sur la figure 3 par une diode 13 et, d'un second côté appelé sortie, à la réserve d'énergie 11. Les convertisseurs continu-continu de sortie 12 sont reliés, en entrée, au premier côté du chargeur 10 et, délivrent en sortie des tensions continues régulées VS.

Le module anti-retour 13' peut être formé d'une diode. Il permet de déconnecter l'alimentation du réseau RC pendant la microcoupure et empêche une puissance provenant de la réserve d'énergie 11 d'atteindre le réseau RC. Ainsi la réserve d'énergie 11 ne se déchargera pas dans le réseau RC mais dans les convertisseurs de sortie 12. On expliquera plus loin le fonctionnement du dispositif d'alimentation à découpage objet de l'invention.

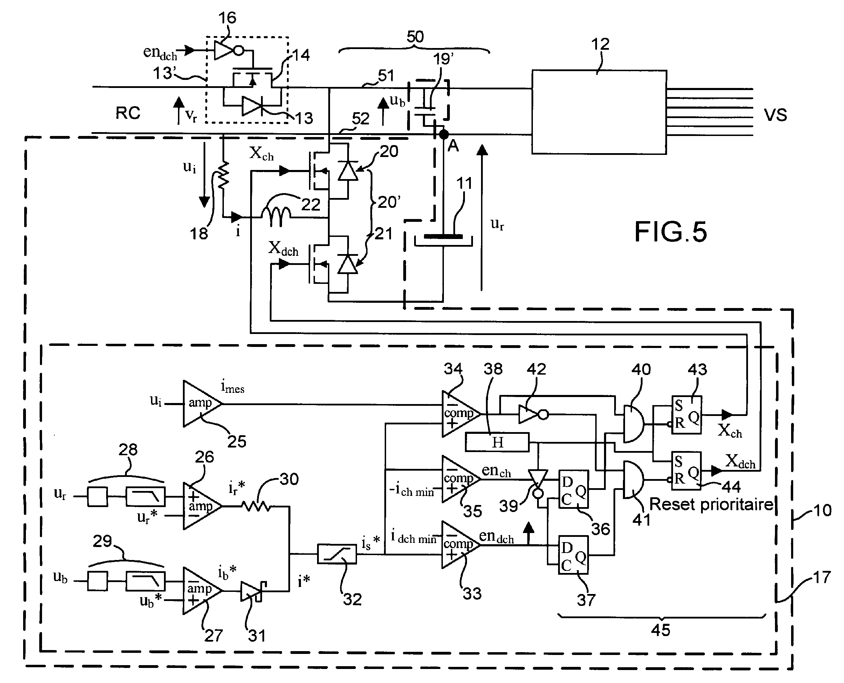

En variante le module anti-retour 13' pourrait être formé par au moins un composant commandable tel un transistor, un interrupteur, un relais mécanique ou tout autre élément interrupteur unidirectionnel en courant et par un module de commande pour le commander. Ces éléments ne sont pas illustrés pour ne pas multiplier inutilement le nombre de figures. Selon une autre variante illustrée sur la figure 5, le module anti-retour 13' pourrait être formé de la diode 13 montée en parallèle avec un interrupteur commandé 14 (par exemple un transistor MOSFET), afin de réduire la tension à ses bornes, et du module de commande 16 de l'interrupteur commandé 14.

Le chargeur 10 est un convertisseur unidirectionnel en tension et réversible en courant. C'est la raison pour laquelle on a parlé de premier côté et second côté lorsque l'on a décrit le chargeur 10.

On appelle bus 50 une liaison qui relié le premier côté du chargeur 10 à l'entrée des convertisseurs de sortie 12. Il est formé de deux conducteurs 50, 52 électriques.

La présente invention concerne également un aéronef 60 qui comporte un dispositif d'alimentation à découpage selon l'invention.

### Exemple de réalisation

Dans un exemple de réalisation illustré sur les figures 4 et 5, on utilise une topologie inverseuse, appelée « buck-boost » soit « abaisseur-élévateur », pour le chargeur 10. Cette topologie présente la particularité d'avoir une tension de sortie de signe opposé à la tension d'entrée.

Le chargeur 10 comporte au moins une cellule de commutation 20' formée de deux interrupteurs 20, 21 reliés l'un à l'autre et ayant un point commun. Chacun des interrupteurs peut être formé, par exemple, d'un transistor MOSFET pouvant être monté en antiparallèle avec une diode. La cellule de commutation 20' est connectée à une extrémité à un des conducteurs 51 du bus et à l'autre extrémité à une borne de la réserve d'énergie 11. C'est l'interrupteur 20 qui est connecté à un des conducteurs 51 du bus 50 et l'interrupteur 21 qui est connecté à la réserve d'énergie 11. L'autre borne de la réserve d'énergie 11 est connectée à l'autre conducteur 52 du bus 50 en un point A. Une unité de commande 17 sert à la commande des interrupteurs 20, 21 et donc à la gestion de la charge et de la décharge de la réserve d'énergie 11. Chaque cellule de commutation 20'coopère avec une inductance 22 qui est reliée, d'une part, au point A et d'autre part, au point commun aux deux interrupteurs 20, 21. L'inductance 22 peut être montée en série avec une résistance 18 qui sert pour mesurer un courant i qui va traverser l'inductance 22 lors de l'utilisation du dispositif d'alimentation à découpage objet de l'invention, comme sur la figure 5. Cette résistance pourrait être absente comme sur la figure 4 et remplacée par un capteur de courant approprié (non représenté).

Le chargeur 10 comporte en outre un condensateur 19' monté en entrée des convertisseurs de sortie 12. Il est chargé d'absorber des composantes alternatives de courant circulant dans le bus 50 et générées par la cellule de commutation 20'.

On appelle vᵣ une tension délivrée par le réseau RC ou tension réseau. On appelle u_{b} une tension entre les deux conducteurs 51, 52 du bus 50 ou tension bus et uᵣ une tension aux bornes de la réserve d'énergie 11 ou tension réserve.

Dans l'exemple de la figure 5, le module anti-retour 13' est formé de la diode 13, de l'interrupteur commandé 14 qui est ici un transistor et du module 16 de commande de l'état passant ou bloqué de l'interrupteur commandé 14.

L'unité de commande 17 délivre à l'interrupteur 20, un signal de commande X_{ch} servant pour la charge et à l'interrupteur 21, un signal de commande X_{dch} servant pour la décharge.

En fonctionnement, la gestion de la tension de bus u_{b} et la gestion de la tension de réserve uᵣ sont les suivantes :
- Lorsque la tension réseau vᵣ est suffisante, dans une première phase ou phase de charge, il y a charge de la réserve d'énergie 11 à la tension de réserve uᵣ, puis maintien de la tension de réserve uᵣ. L'alimentation des convertisseurs de sortie 12 se fait à partir du réseau RC.
- Lorsque la tension réseau vᵣ est insuffisante, ce qui dans ce contexte correspond à une microcoupure, et que la tension de réserve uᵣ le permet, dans une seconde phase ou phase de décharge, il y a maintien de la tension de bus u_{b} à un niveau suffisant pour un fonctionnement correct des convertisseurs de sortie 12. L'alimentation des convertisseurs de sortie 12 se fait à partir de la réserve d'énergie 11.

Dans ce contexte, la tension réseau vᵣ suffisante signifie qu'elle est supérieure à un seuil, ce seuil est tel que s'il n'est pas dépassé, les convertisseurs de sortie 12 ont un fonctionnement perturbé, ils ne peuvent fournir des tensions de sortie VS ayant les valeurs souhaitées. De la même manière la tension de bus u_{b} a un niveau suffisant si elle est supérieure à ce seuil.

Une telle structure de chargeur présente surtout l'avantage de permettre l'existence d'un courant de charge ou décharge, que la tension de réserve uᵣ soit supérieure ou inférieure à la tension de bus u_{b}. En particulier, le courant de charge reste maîtrisé lorsque la réserve d'énergie 11 est complètement déchargée. En outre, on dispose d'une grande liberté pour fixer la tension de charge uᵣ de la réserve d'énergie 11 en fonctionnement normal et la tension de bus u_{b} au cours de la microcoupure.

On va maintenant décrire en se référant à la figure 5 un exemple de réalisation de l'unité de commande 17. Cette unité de commande 17 comprend :
- un module 25 de mesure de courant,
- une unité 26, 27, 28, 29, 30 et 31 de mise en forme de courants de référence et d'arbitrage entre ceux-ci,
- un module 32 de limitation de courant,
- un module de régulation de courant crête 34, 42,
- une unité 33, 35, de comparaison de courant qui génère des signaux d'autorisations de charge et de décharge (en_{ch}, en_{dch}),
- une unité 36, 37 de synchronisation des signaux d'autorisations de charge et de décharge,
- un module d'horloge 38, 39,
- une unité 40, 41, 43, 44 de génération de signaux de commande des interrupteurs de la cellule de commutation.

On va décrire, par la suite, la fonction de chacun de ces modules et unités et leur agencement les uns par rapport aux autres.

Le module 25 de mesure de courant se trouve sur une première voie. Il reçoit une tension uᵢ mesurée aux bornes de la résistance 18 et délivre un signal iₘₑₛ qui est représentatif du courant qui circule effectivement dans l'inductance 22 et que l'on mesure ainsi. Le module 25 de mesure de courant est réalisé par un amplificateur de gain négatif. On aurait pu en variante mesurer le courant dans les interrupteurs 20, 21 de la cellule de commutation.

L'unité 26, 27, 28, 29, 30 et 31 de mise en forme de courants de référence et d'arbitrage entre ceux-ci comporte sur une seconde voie, un premier amplificateur 26 et sur une troisième voie un second amplificateur 27.

Le premier amplificateur 26 reçoit sur une entrée + la tension de réserve uᵣ (tension aux bornes de la réserve d'énergie 11) après conditionnement dans un circuit de conditionnement 28 et sur une entrée - une consigne de tension de réserve uᵣ*. Il délivre un signal iᵣ^{*} en sortie. Le signal iᵣ* est un courant de référence pour la tension de réserve correspondant à une consigne de courant dans l'inductance 22 apte à réguler la tension de réserve uᵣ.

Le second amplificateur 27 reçoit sur une entrée + la tension de bus u_{b} (en entrée des convertisseurs de sortie 12) après conditionnement dans un circuit de conditionnement 29 et sur une entrée - une consigne de tension de bus u_{b}*. Il délivre en sortie un signal i_{b}*. Le signal i_{b}* est un courant de référence pour la tension de bus correspondant à une consigne de courant dans l'inductance 22 apte à réguler la tension de bus u_{b}. La consigne de tension de bus u_{b}* est choisie de telle manière que, lorsque la tension de bus u_{b} est inférieure à cette valeur de consigne u_{b}*, l'énergie du réseau RC est utilisée pour alimenter les convertisseurs de sortie 12 et, que lorsque la tension de bus u_{b} est supérieure à cette valeur de consigne u_{b}*, l'énergie de la réserve d'énergie 11 est utilisée pour alimenter les convertisseurs de sortie 12.

La consigne de tension de réserve uᵣ* est choisie de manière à, d'une part, préserver la réserve d'énergie 11 et d'autre part, pouvoir y stocker une énergie suffisante à l'alimentation des convertisseurs de sortie 12.

Il faut ensuite choisir quel courant de référence parmi les signaux i_{b}* et iᵣ* va être utilisé pour asservir le courant dans l'inductance 22, cet asservissement étant réalisé par le module de régulation de courant crête 34, 42 et par l'unité 33, 35 de comparaison de courant.

Pour permettre un arbitrage entre les courants de référence iᵣ* et i_{b}*, le courant de référence pour la tension de réserve iᵣ* est entré dans une résistance 30 branchée par une extrémité en sortie du premier amplificateur 26, et le courant de référence pour la tension de bus i_{b}* est entré dans une diode Schottky 31 ayant une anode branchée en sortie du second amplificateur 27. L'autre extrémité de la résistance 30 et la cathode de la diode Schottky 31 sont reliées ensemble en un point commun sur lequel apparaît une consigne de courant de commande i*.

La consigne de courant de commande i* est égale à celui des deux courants de référence iᵣ* et i_{b}* qui est algébriquement le plus grand (c'est à dire celui qui va le plus dans le sens d'un transfert d'énergie de la réserve d'énergie 11 vers le bus 50). En effet, si par exemple, la tension de réserve uᵣ est supérieure à la consigne de tension de réserve uᵣ* alors le courant de référence pour la tension de réserve iᵣ* est positif (iᵣ*>0) et si la tension de bus u_{b} est supérieure à la consigne de tension de bus u_{b}* également alors le courant de référence pour la tension de bus i_{b}* est négatif (i_{b}*<0), il faut décharger la réserve d'énergie 11 et non le bus, ce qui fait que la consigne de courant i* doit être positive (i*>0). De même, si la tension de réserve uᵣ est inférieure à la consigne de tension de réserve uᵣ* alors le courant de référence pour la tension de réserve iᵣ* est négatif (iᵣ*<0) et si la tension de bus u_{b} est inférieure à la consigne de tension de bus u_{b}* également alors le courant de référence pour la tension de bus i_{b}* est positif (i_{b}*>0), il faut décharger la réserve d'énergie 11 et non le bus, ce qui fait que la consigne de courant i* doit être positive (i*>0).

Ce point commun est aussi connecté à l'entrée d'un module de limitation de courant 32 qui délivre en sortie une consigne de courant de commande saturée iₛ* qui traduit un courant i désiré circulant dans l'inductance 22 pour que les tensions de sortie VS puissent avoir les valeurs voulues. Ce courant i est compté positivement dans le sens de la flèche (voir la figure 5).

La consigne de courant de commande i* est saturée par le module de limitation de courant 32 en positif à une valeur iₘₐₓ* et en négatif à une valeur iₘᵢₙ*.

La sortie du module de limitation de courant 32 est reliée à une entrée + d'un premier comparateur de courant 34 qui reçoit sur une entrée - le signal iₘₑₛ. Ce premier comparateur de courant 34 fait partie du module de régulation de courant crête.

La sortie du module de limitation de courant 32 est aussi reliée à une entrée + d'un second comparateur de courant 33 qui reçoit sur une entrée - un signal i_{dchmin}.

La sortie du module de limitation de courant 32 est également reliée à une entrée - d'un troisième comparateur de courant 35 qui reçoit sur une entrée + un signal - i_{chmin}.

Le second et le troisième comparateur de courant 33, 35 font partie de l'unité de comparaison de courant.

Les signaux i_{dchmin} et i_{chmin} correspondent à des valeurs de la valeur absolue de la consigne de courant de commande saturée iₛ* en dessous desquelles, il est préférable que le chargeur ne délivre aucun courant, pour des raisons d'économie d'énergie et de stabilité de la régulation. On les appelle aussi courant de charge ou de décharge minimum.

Le premier comparateur de courant 34 délivre un signal d'ouverture de l'un ou l'autre des interrupteurs 20, 21 de la cellule de commutation 20'.

Le second comparateur de courant 33 délivre un signal en_{dch} qui correspond à une autorisation de décharge de la réserve d'énergie 11. Le signal en_{dch} est utilisé, pour la commande du module anti-retour 13'. Le module de commande 16 de l'interrupteur commandé 14 est une porte NON. L'interrupteur 14 est ouvert lors de la décharge.

Le troisième comparateur de courant 35 délivre un signal en_{ch} qui correspond à une autorisation de charge de la réserve d'énergie 11.

Les autorisations de charge ou de décharge en_{ch} et en_{dch} en sortie des troisième et seconds comparateurs 35 et 33 dépendent du signe et de l'amplitude de la consigne de courant de commande saturée iₛ*. Pour maintenir la charge on utilise un fonctionnement par paquets.

Les sorties du second et du troisième comparateur 33, 35 qui délivrent des signaux d'autorisations en_{ch} et en_{dch}, sont reliées à un module 45 de synchronisation de ces signaux d'autorisations en_{ch} et en_{dch}.

Ce module de synchronisation 45 comprend une première et une seconde bascule D 36 et 37.

Ce type de bascule D, appelé également verrou, possède une entrée de donnée D, une entrée d'horloge C et une sortie Q. La sortie Q recopie l'entrée de donnée D tant que son entrée d'horloge C est à un niveau haut. La sortie Q reste figée dans son état précédent tant que son entrée d'horloge C est à un niveau bas.

L'unité de commande 17 comporte donc un module d'horloge avec une horloge 38 et une porte NON 39 dont une entrée est reliée en sortie de l'horloge 38. La porte NON 39 est reliée en sortie à l'entrée C de chacune des bascules D 36 et 37. Les bascules D 36 et 37 reçoivent donc sur leur entrée d'horloge C un signal d'horloge inversé par rapport à un signal d'horloge délivré par l'horloge 38.

La première bascule D 36 a son entrée D reliée en sortie du troisième comparateur de courant 35.

La seconde bascule D 37 a son entrée D reliée en sortie du second comparateur de courant 33. Ces bascules D 36, 37 servent à ce que le changement entre alimentation réseau et alimentation par la réserve d'énergie et vice versa, c'est-à-dire passage entre la première phase et la seconde phase eou l'inverse, n'intervienne jamais lorsque l'un des interrupteurs 20, 21 de la cellule de commutation 20' est fermé.

L'unité de commande 17 comporte, en outre, une unité 40, 41, 43, 44 de commande des interrupteurs 20, 21 de la cellule de commutation 20'. Cette unité de commande des interrupteurs 20, 21 de la cellule de commutation 20' comporte une première porte ET 40 et une seconde porte ET 41.

La première porte ET 40 a une première entrée reliée en sortie du premier comparateur de courant 34 et une seconde entrée reliée à une sortie Q de la première bascule D 36.

La seconde porte ET 41 a une première entrée reliée en sortie d'une porte NON 42 ayant une entrée connectée en sortie du premier comparateur de courant 34 et une seconde entrée reliée à une sortie Q de la seconde bascule D 37. Cette porte NON 42 fait partie du module de régulation de courant crête.

L'unité de commande des interrupteurs 20, 21 de la cellule de commutation 20' comporte, en outre, une première bascule RS 43 et une seconde bascule RS 44. Ces bascules RS ont une entrée S ou Set active sur front montant, servant d'inhibition sur niveau bas, et une entrée R ou Reset prioritaire active sur niveau bas.

Ces bascules RS 43, 44 ont toutes les deux leur entrée S reliée en sortie de l'horloge 38.

La première bascule RS a son entrée R reliée sortie de la première porte ET 40. La seconde bascule RS 44 a son entrée R reliée en sortie de la seconde porte ET 41.

La première bascule RS 43 a une sortie Q reliée à l'interrupteur 20 pour le commander, cette sortie Q délivre le signal de commande X_{ch} de découpage pour la première phase ou phase de charge de la réserve d'énergie 11.

La seconde bascule RS 44 a une sortie Q reliée à l'interrupteur 21 pour le commander, cette sortie Q délivre le signal de commande X_{dch} de découpage pour la seconde phase ou phase de décharge de la réserve d'énergie 11.

En résumé, grâce à l'unité de commande 17, une stratégie de commande préférée est la suivante :
- -on se munit de, c'est-à-dire on définit, la consigne de tension de réserve uᵣ* et de la consigne de tension de bus u_{b}*, comme décrit précédemment ;
- - on génère le courant de référence pour la tension de réserve iᵣ* à partir de la tension de réserve uᵣ et de la consigne de tension de réserve uᵣ* ;
- - on génère le courant de référence pour la tension de bus i_{b}* à partir de la tension de bus u_{b} et de la consigne de tension de bus u_{b}* ;
- -on génère la consigne de courant de commande i* en choisissant celui des deux courants de référence i_{b}* et iᵣ* qui est algébriquement le plus grand;
- -on génère la consigne de courant de commande saturée iₛ* à partir de la consigne de courant de commande i*.

On asservit le courant qui va circuler dans l'inductance 22 en fonction de la consigne de courant de commande saturée iₛ* et pour cela, dans une commande exclusive, en fonction du signe de iₛ*, on détermine lequel des deux interrupteurs 20, 21 du chargeur 10 doit être commandé, l'autre interrupteur non commandé restant alors ouvert en permanence, et seule sa diode antiparallèle conduisant du courant. Cela présente l'avantage de réduire l'ondulation de courant dans tous les cas où le courant dans l'inductance 22 s'annule (conductions discontinue). Or, il est connu que pour une puissance et une fréquence de convertisseur donnée, l'inductance de volume minimal impose un fonctionnement en conduction discontinue. Il est connu par ailleurs, que la régulation de la structure inverseuse est plus simple et plus performante en conduction discontinue. En particulier, cela permet d'avoir un courant efficace pratiquement nul dans l'inductance 22 en fonctionnement normal, c'est à dire lorsque le chargeur 10 travaille uniquement à maintenir la charge de la réserve d'énergie 11. La méthode préférée pour réaliser l'asservissement du courant est la méthode dite du « peak current mode », « soit mode de courant de crête » appliquée à la valeur absolue du courant.
- Cette stratégie présente entre autres les avantages suivants :
- La constitution de i* comme choix de la plus grande des deux valeurs i_{b}* et iᵣ*, qui assure que le passage d'un mode à l'autre (de i*=i_{b}* à i*=iᵣ* et vice-versa), n'introduit pas de discontinuité sur i*, donc pas de perturbation du dispositif de l'invention.
- Elle permet, en outre, un fonctionnement sans oscillations à l'intersection des deux phases. En particulier lorsque le réseau RC est très impédant et/ou le courant de charge très important, par exemple au moins trois fois le courant en régime permanent, si le courant absorbé sur le réseau RC pour charger la réserve d'énergie 11 fait chuter la tension réseau vᵣ jusqu'au voisinage de u_{b}*, la régulation de tension de bus u_{b} se fait simultanément à la charge la réserve d'énergie 11 (sous un courant réduit), évitant ainsi un écroulement plus important du réseau RC ou d'éventuelles oscillations. Une telle propriété permet de régler le courant de charge de la réserve d'énergie 11 (via iₘᵢₙ*) de façon à obtenir une charge très rapide lorsque le réseau RC est peu impédant, sans que cela pose de problème lorsque le réseau RC est très impédant.
- L'existence de deux boucles de tension séparées permet un réglage différent selon les besoins. En effet, la présence de condensateurs de valeurs différentes sur les deux tensions à réguler peut exiger des gains différents.
- Il est également possible de moduler le gain en fonction du signe de i*.

Pour l'asservissement du courant dans l'inductance 22 en fonction de la consigne de courant de commande saturée iₛ*, une autre stratégie est possible. Dans une commande complémentaire, on commande les deux interrupteurs 20 et 21 du chargeur 10 de façon complémentaire. Le courant dans l'inductance 22 est donc une dent de scie, dont la forme est qualitativement la même, qu'elle prenne des valeurs positives exclusivement, négatives exclusivement, ou des valeurs positives et négatives (ce qui est le cas par exemple si la consigne de courant de commande saturée iₛ* est proche de zéro). Le comportement de la boucle de courant est donc indépendant du signe et de la valeur de la consiggne de courant de commande saturée iₛ*, ce qui simplifie la mise au point des boucles de tension. En revanche, le courant dans l'inductance 22 présente en permanence une ondulation importante, donnant lieu à des pertes significatives. L'asservissement du courant peut être réalisé par exemple par une commande à hystérésis ou bien par un calcul du rapport cyclique issu d'un correcteur proportionnel ou proportionnel intégral.

Le dispositif d'alimentation à découpage de l'invention présente les avantages suivants :
- il utilise un chargeur qui, dans la première phase (phase de charge), permet de charger la réserve d'énergie et qui, dans la seconde phase (phase de décharge), permet de décharger la réserve d'énergie sans modification de la topologie en fonction des phases de fonctionnement.
- Les convertisseurs de sortie voient à leur entrée une tension continue régulée pendant l'utilisation de la réserve d'énergie (microcoupure) indépendamment de la tension aux bornes de cette réserve d'énergie.
- Les convertisseurs de sortie sont reliés (par le chargeur) en permanence à la réserve d'énergie. Ils ne sont donc pas perturbés au début de la microcoupure, lorsqu'ils cessent d'utiliser l'énergie du réseau pour commencer à utiliser celle de la réserve d'énergie. Il en va de même à la fin de la coupure.
- Le chargeur ne génère des pertes significatives que pendant la durée de charge initiale de la réserve d'énergie, et pendant la microcoupure.

## Revendications

1. Dispositif d'alimentation à découpage comprenant un chargeur (10) destiné à être relié d'un premier côté à un réseau électrique continu, ou alternatif redressé (RC), une réserve d'énergie (11) reliée à un second côté du chargeur (10), des convertisseurs continu-continu de sortie (12) délivrant des tensions de sortie régulées (VS), les convertisseurs de sortie (12) étant connectés par une entrée au premier côté du chargeur (10), le chargeur (10) étant un convertisseur unidirectionnel en tension et réversible en courant qui, dans une première phase, permet de recharger et de maintenir chargée la réserve d'énergie (11) à partir du réseau, les convertisseurs de sortie (12) étant alimentés par le réseau (RC), et qui, dans une seconde phase, en présence d'une microcoupure d'alimentation du réseau (RC), permet de décharger la réserve d'énergie (11) pour alimenter les convertisseurs de sortie (12), le dispositif d'alimentation comportant, en outre, un module anti-retour (13') connecté au premier côté du chargeur (10) pour déconnecter le chargeur (10) et les convertisseurs de sortie (12) du réseau (RC) durant la seconde phase, et un bus (50) à deux conducteurs (51, 52) reliant le premier côté du chargeur (10) à l'entrée des convertisseurs de sortie (12), le chargeur (10) comprenant au moins une cellule de commutation (20') avec deux interrupteurs ayant un point commun, connectée, à une extrémité, à la réserve d'énergie (11), à l'autre extrémité, à un conducteur du bus, une inductance (22) insérée entre l'autre conducteur du bus et le point commun aux deux interrupteurs (20, 21), et une unité de commande (17) pilotant les interrupteurs (20, 21) de cette au moins une cellule de commutation (20'),
le dispositif d'alimentation étant **caractérisé en ce que** l'unité de commande (17) comprend :
- un module (25) de mesure de courant mesurant un courant circulant dans l'inductance (22) ou dans les interrupteurs de la cellule de commutation ;
- une unité (26, 27, 28, 29, 30, 31) de mise en forme de courants de référence et d'arbitrage entre ceux-ci recevant en entrée une tension de réserve (uᵣ) prélevée aux bornes de la réserve d'énergie (11), une tension de bus (u_{b}) prélevée entre les deux conducteurs (51, 52) de bus, une consigne de tension de réserve (uᵣ*), une consigne de tension de bus (u_{b}*), générant un courant de référence pour la tension de bus (ib*) et un courant de référence pour la tension de réserve (ir*) et réalisant un arbitrage entre ces courants de référence sous la forme d'une consigne de courant de commande (i*), le courant de référence pour la tension de bus (i_{b}*) servant à réguler la tension de bus (u_{b}) et le courant de référence pour la tension de réserve (iᵣ*) servant à réguler la tension de réserve (uᵣ), la consigne de courant de commande (i*) étant la plus grande des valeurs du courant de référence pour la tension de bus (i_{b}*) et du courant de référence pour la tension de réserve (iᵣ*);
- un module (32) de limitation de courant relié en entrée à une sortie de l'unité (26, 27, 28, 29, 30, 31) de mise en forme limitant la consigne de courant de commande (i*) et délivrant une consigne de courant de commande saturée (iₛ*),
- un module de régulation de courant crête (34, 42) relié en entrée à une sortie du module de mesure de courant (25) et à une sortie du module de limitation de courant (32);
- une unité (33, 35) de comparaison de courant qui génère des signaux d'autorisations de charge et de décharge (en_{ch}, en_{dch}) à partir de la consigne de courant de commande saturée (iₛ*) et de valeurs de courant de charge et de décharge minimum (i_{chmin}, i_{dchmin}), reliée à une entrée en sortie du module de limitation de courant (32);
- un module d'horloge (38, 39) ;
- une unité (36, 37) de synchronisation d'autorisations de charge et de décharge, reliée en entrée au module d'horloge (38, 39) et à une sortie de l'unité (33, 35) de comparaison de courant ;
- une unité (40, 41, 43, 44) de génération de signaux de commande des interrupteurs (20, 21) de la cellule de commutation (20'), reliée en entrée à une sortie du module de régulation de courant crête (34, 42), à une sortie de l'unité (36, 37) de synchronisation d'autorisations de charge et de décharge et au module d'horloge (38, 39) et délivrant en sortie les signaux de commande des interrupteurs (20, 21) de la cellule de commutation (20').

2. Dispositif selon la revendication 1, dans lequel le module anti-retour (13') comporte une diode, ou au moins un composant commandable tel qu'un transistor, un interrupteur, un relais mécanique, un élément interrupteur unidirectionnel en courant, ou une diode (13) montée en parallèle avec un interrupteur (14) et un module de commande du composant commandable ou de l'interrupteur.

3. Dispositif selon l'une des revendications 1 ou 2, dans lequel le module anti-retour (13') est commandé par le signal d'autorisation de décharge (en_{dch}).

4. Aéronef comprenant au moins un dispositif d'alimentation selon l'une quelconque des revendications précédentes.

## Patentansprüche

1. Schaltnetzteilvorrichtung, umfassend einen Lader (10), der dazu bestimmt ist, auf einer Seite an ein Gleichstromnetz oder gleichgerichtetes Wechselstromnetz (RC) angeschlossen zu sein, einen Energiespeicher (11), der auf einer zweiten Seite des Laders (10) angeschlossen ist, Gleichstrom-Gleichstrom-Ausgangswandler (12), die geregelte Ausgangsspannungen (VS) erzeugen, wobei die Ausgangswandler (12) durch einen Eingang an der ersten Seite des Laders (10) angeschlossen sind, wobei der Lader (10) ein unidirektionaler Spannungswandler und reversibler Stromwandler ist, der in einer ersten Phase ermöglicht, den Energiespeicher (11) aus dem Netz wieder aufzuladen und geladen zu halten, wobei die Ausgangswandler (12) durch das Netz (RC) gespeist werden, und der in einer zweiten Phase in Anwesenheit einer Mikro-Abschaltung des Netzes (RC) ermöglicht, den Energiespeicher (11) zu entladen, um die Ausgangswandler (12) zu speisen, wobei die Schaltnetzteilvorrichtung ferner ein Rückschlagmodul (13'), das an der ersten Seite des Laders (10) angeschlossen ist, um den Lader (10) und die Ausgangswandler (12) des Netzes (RC) während der zweiten Phase zu trennen, und einen Bus (50) mit zwei Leitern (51, 52) aufweist, die die erste Seite des Laders (10) mit dem Eingang des Ausgangswandlers (12) verbinden, wobei der Lader (10) mindestens eine Kommutationszelle (20') mit zwei Schaltern mit einem gemeinsamen Punkt, die an einem Ende mit dem Energiespeicher (11), an dem anderen Ende mit einem Leiter des Busses verbunden ist, eine Induktanz (22), die zwischen dem anderen Leiter des Busses und dem gemeinsamen Punkt der beiden Schalter (20, 21) eingesetzt ist, und eine Steuereinheit (17) aufweist, die die Schalter (20, 21) dieser mindestens einen Kommutationszelle (20') steuert,
wobei die Schaltnetzteilvorrichtung **dadurch gekennzeichnet ist, dass** die Steuereinheit (17) Folgendes aufweist:
- ein Strommessmodul (25), das einen Strom misst, der in der Induktanz (22) oder in den Schaltern der Kommutationszelle fließt;
- eine Einheit (26, 27, 28, 29, 30, 31) zum Formen von Referenzströmen und Auswahlströmen unter jenen, die im Eingang eine Reservespannung (uᵣ), die an den Klemmen des Energiespeichers (11) abgenommen wird, eine Busspannung (u_{b}), die zwischen den zwei Busleitern (51, 52) abgenommen wird, einen Sollwert der Reservespannung (uᵣ*), einen Sollwert der Busspannung (u_{b}*) erhalten, die einen Referenzstrom für die Busspannung (ib*) und einen Referenzstrom für die Reservespannung (ir*) erzeugen und eine Auswahl zwischen diesen Referenzströmen in der Form eines Steuerstromsollwerts (i*) treffen, wobei der Referenzstrom für die Busspannung (i_{b}*) dazu dient, die Busspannung (u_{b}) zu regeln und der Referenzstrom für die Reservespannung (iᵣ*) dazu dient, die Reservespannung (uᵣ) zu regeln, wobei der Steuerstromsollwert (i*) der größte der Referenzstromwerte für die Busspannung (i_{b}*) und des Referenzstroms für die Reservespannung (iᵣ*) ist;
- ein Strombegrenzungsmodul (32), das am Eingang an einen Ausgang der Einheit (26, 27, 28, 29, 30, 31) zum Formen angeschlossen ist, das den Steuerstromsollwert (i*) begrenzt und einen gesättigten Steuerstromsollwert (iₛ*) abgibt,
- ein Regelmodul des Spitzenstroms (34, 42), das am Eingang an einen Ausgang des Strommessmoduls (25) und an einen Ausgang des Strombegrenzungsmoduls (32) angeschlossen ist;
- eine Einheit (33, 35) zum Vergleichen des Stroms, die Signale zur Genehmigung des Ladens und des Entladens (en_{ch}, en_{dch}) ausgehend von dem gesättigten Steuerstromsollwert (iₛ*) und von Ladestrom- und Entladestrommindestwerten (i_{chmin}, i_{dchmin}) erzeugt, die am Ausgang an einen Eingang des Strombegrenzungsmoduls (32) angeschlossen ist;
- ein Taktmodul (38, 39);
- eine Einheit (36, 37) zum Synchronisieren der Genehmigungen des Ladens und des Entladens, die im Eingang an das Taktmodul (38, 39) und an einen Eingang der Einheit (33, 35) zum Vergleichen des Stroms angeschlossen ist;
- eine Einheit (40, 41, 43, 44) zum Erzeugen von Schaltsteuersignalen (20, 21) der Kommutationszelle (20'), die im Eingang an einen Ausgang des Regelmoduls des Spitzenstroms (34, 42), an einen Ausgang der Einheit (36, 37) zum Synchronisieren der Genehmigungen des Ladens und des Entladens und an das Taktmodul (38, 39) angeschlossen ist und im Ausgang die Steuersignale der Schalter (20, 21) der Kommutationszelle (20') abgibt.

2. Vorrichtung nach Anspruch 1, wobei das Rückschlagmodul (13') eine Diode oder mindestens ein steuerbares Bauelement, wie einen Transistor, einen Schalter, ein mechanisches Relais, ein stromunidirektionales Schaltelement oder eine Diode (13), die parallel mit einem Schalter (14) montiert ist, und ein Steuermodul des steuerbaren Bauelements oder des Schalters aufweist.

3. Vorrichtung nach einem der Ansprüche 1 oder 2, wobei das Rückschlagmodul (13') von dem Signal zur Genehmigung des Entladens (en_{dch}) gesteuert wird.

4. Luftfahrzeug, umfassend mindestens eine Schaltnetzteilvorrichtung nach einem der vorhergehenden Ansprüche.

## Claims

1. A switched-mode power supply device including a charger (10) intended to be connected at a first side to a direct current electrical network, or rectified alternating current electrical network (RC), a power reserve (11) connected to a second side of the charger (10), output DC-DC converters (12) delivering regulated output voltages, the output converters (12) being connected by one input to the first side of the charger (10), wherein the charger (10) is a current bidirectional, voltage unidirectional converter which, in a first phase, enables the power reserve (11) to be recharged and maintained charged from the network, wherein the output converters (12) are powered by the network (RC), and which, in a second phase, in the presence of a power brown-out of the network (RC), enables the power reserve (11) to be discharged to power the output converters (12), and
wherein the power supply device also includes a reverse blocking module (13') connected to the first side of the charger (10) to disconnect the charger (10) and the output converters (12) of the network (RC) during the second phase, wherein a bus (50) with two conductors (51, 52) connects the first side of the charger (10) to the input of the output converters (12), wherein the charger (10) includes at least one switching cell (20') with two switches which have a common point connected at one end to the power reserve (11), and at the other end to a first conductor of the bus, wherein an inductor (22) is inserted between the other conductor of the bus and the point common to both switches (20, 21), wherein a control unit (17) controls the switches (20, 21) of said at least one switching cell (20'), the power supply device being **characterized in that** the control unit (17) includes:
- a current measurement module (25) measuring a current flowing in the inductor (22) or in the switches of the switching cell;
- a unit (26, 27, 28, 29, 30, 31) for shaping reference currents and for arbitrating between them, receiving at its input a reserve voltage taken from the terminals of the power reserve (11), a bus voltage (u_{b}) taken between the two bus conductors (51, 52), a reserve voltage set point (uᵣ*), a bus voltage set point (u_{b}*), and generating a reference current (i_{b}*) for the bus voltage, and a reference current (iᵣ*) for the reserve voltage, and arbitrating between these reference currents in the form of a control current set point (i*), the reference current (i_{b}*) for the bus voltage being used to regulate the bus voltage (u_{b}) and the reference current (iᵣ*) for the reserve voltage being used to regulate the reserve voltage (uᵣ), wherein the control current set point (i*) is the larger of the reference current value (i_{b}*) for the bus voltage and the reference current value (iᵣ*) for the reserve voltage;
- a current limiting module (32) connected at its input to an output of the shaping unit (36, 27, 28, 29, 30, 31), for limiting the control current set point (i*), and delivering a saturated control current set point (is*);
- a peak current regulating module (34, 42) connected at its input to an output of the current measurement module (25) and to an output of the current limiting module (32);
- a current comparison unit (33, 35) which generates charge and discharge authorization signals (en_{ch}, en_{dch}) from the saturated control current set point (iₛ*) and minimum charge discharge current values (i_{chmin}, i_{dchmin}), connected at one input to the output of the current limiting module (32);
- a clock module (39, 39);
- a unit (36, 37) to synchronize charge and discharge authorizations, connected at its input to the clock module (38, 39), and to an output of the current comparison unit (33, 35);
- a unit (40, 41, 43, 44) for generating signals to control the switches (20, 21) of the switching cell (20'), connected at its input to an output of the peak current regulating module (34, 42), and to an output of the charge and discharge authorizations synchronization unit (36, 37), and to the clock module (38, 39), and delivering at its output the signals to control the switches (20, 21) of the switching cell (20').

2. A device according to claim 1, wherein the reverse blocking module (13') includes a diode or at least one controllable component, such as a transistor, a switch, a mechanical relay, a current unidirectional switch element, or a diode (13) installed in parallel with a switch and a module to control the controllable component or switch.

3. A device according to one of claims 1 and 2, wherein the reverse blocking module (13') is controlled by the discharge authorization signal (en_{dch}).

4. An aircraft including at least one power supply device according to any one of the preceding claims.
